Europäisches Patentamt

European Patent Office

Office européen des brevets

(11) Publication number: **0 101 580**
**B1**

# EUROPEAN PATENT SPECIFICATION

(45) Date of publication of patent specification: **30.12.86**

(51) Int. Cl.⁴: **G 01 F 23/26**

(21) Application number: **83107519.7**

(22) Date of filing: **29.07.83**

(54) Capacitance-type material level indicator.

(30) Priority: **25.08.82 US 411524**
**25.08.82 US 411525**
**25.08.82 US 411527**
**20.09.82 US 419776**

(43) Date of publication of application:
**29.02.84 Bulletin 84/09**

(45) Publication of the grant of the patent:
**30.12.86 Bulletin 86/52**

(84) Designated Contracting States:
**CH DE FR GB IT LI SE**

(56) References cited:
**EP-A-0 044 434**
**DE-A-3 029 352**
**DE-B-2 744 864**
**GB-A-1 549 649**
**US-A-3 391 547**
**US-A-4 164 146**
**US-A-4 222 267**

(73) Proprietor: **Berwind Corporation**
**1500 Market Street**
**Philadelphia, PA 19102 (US)**

(72) Inventor: **Brenton, Ronald G.**
**626 St. James**
**Marysville, MI 48040 (US)**
Inventor: **Runck, Robin B.**
**Guardian California 4030 Spencer Street**
**Torrance, CA 90503 (US)**
Inventor: **Fathauer, George H.**
**1550 N. Belair**
**Mesa, AZ (US)**
Inventor: **Hood, Charles F.**
**812 S. Wilbur Circle**
**Mesa, AZ (US)**
Inventor: **Fleckenstein, Phillip P.**
**514 14th Street**
**Port Huron, MI 48060 (US)**

(74) Representative: **Dipl.-Ing. H. Hauck Dipl.-Phys.**
**W. Schmitz Dipl.-Ing. E. Graalfs Dipl.-Ing. W.**
**Wehnert Dr.-Ing. W. Döring**
**Mozartstrasse 23**
**D-8000 München 2 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

# Description

The present invention is directed to a system for indicating the level of material in a vessel comprising a resonant circuit including a capacitance probe adapted to be disposed in the vessel so as to be responsive to variations in capacitance as a function of material level in said vessel, oscillator means coupled to said resonant circuit including said capacitance probe, phase detection means responsive to variations in phase angle at said oscillator means as a function of probe capacitance, means for identifying a reference capacitance indicative of a predetermined level of material in said vessel, and means responsive to said phase detection means and to the identifying means for indicating material level in said vessel as a function of a difference between said probe capacitance and said reference capacitance.

US—A—3391547 illustrates a system of this type wherein the probe capacitance is connected in a capacitance bridge.

GB—A—2025623 discloses a system of similar type wherein amplitude rather than phase variation is employed to measure material level.

EP—A—0044434 discloses a similar system for indicating the level of material in a vessel, comprising a capacitance probe adapted to be disposed in the vessel so as to be responsive to variations in capacitance as a function of material level in said vessel, oscillator means coupled to said capacitance probe, calibration means for identifying a reference capacitance (cf. the capacitance between the sensing element and the conductive member in the absence of the material) indicative of a predetermined level of material in said vessel, and means responsive to said calibration means for indicating material level in said vessel as a function of the difference between capacitance at said probe and said reference capacitance. A somewhat similar system is disclosed in US—A—4164146 wherein phase detection means are used in an inductively working level sensor.

All of these prior art material level indicating systems have employed fairly elaborate manual calibration techniques which require substantial intervention by an operator, and sometimes require a skilled or semi-skilled operator using a meter or the like. The reference level established by these techniques, whether a phase reference or an amplitude reference, must be changed frequently as material build-up on the probe increases or decreases.

It is an object of the present invention to provide a system for indicating the level of material in a vessel employing an automatic calibration technique which may be readily implemented by an unskilled operator, e.g. by merely pushing a single button, and which automatically cancels or nulls the effect of material build-up on the probe.

According to the present invention, a system for indicating the level of material in a vessel of the type as defined above is characterized in that said identifying means comprises comparison means having a first input responsive to said phase detection means, a second input and an output responsive to a comparison between said first and second inputs, reference means connected to said second input and indicative of said reference capacitance, and means for varying operating characteristics of said resonant circuit or said reference means to obtain a predetermined comparison between said first and second inputs, the output of said comparison means being connected to the operating characteristics varying means.

Thus the present invention provides a material level indicating system which may be readily calibrated in the field by relatively unskilled personnel for a variety of applications and environments. Furthermore, such system includes facility for rapid and automatic recalibration in the field by an unskilled operator. The material level indicating system of the present invention has reduced sensitivity to the effects of material coating on the capacitance probe and/or to the effects of conductivity or variation in conductivity of the sensed material.

Further developments and preferred embodiments of the present invention have been included in the Claims 2 to 28.

The invention, together with additional objects, features, and advantages thereof, will be best understood from the following description, the appended claims, and the accompanying drawings in which:

Fig. 1 is a functional block diagram of a presently preferred embodiment of a capacitance-type material level indicating system in accordance with the invention;

Figs. 2 and 3 are electrical schematic diagrams of respective portions of the system illustrated in functional form in Fig. 1;

Figs. 4 and 5 are electrical schematic diagrams of respective alternative embodiments of the preferred embodiment as illustrated in detail in Fig. 2; and

Fig. 6 is a partially sectional fragmentary elevational view of a capacitance sensing probe in accordance with a presently preferred embodiment of the invention.

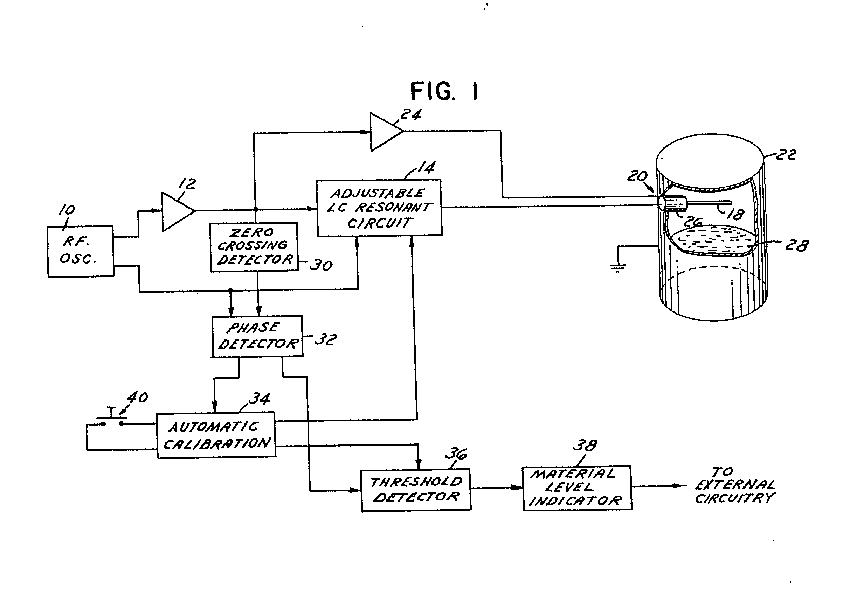

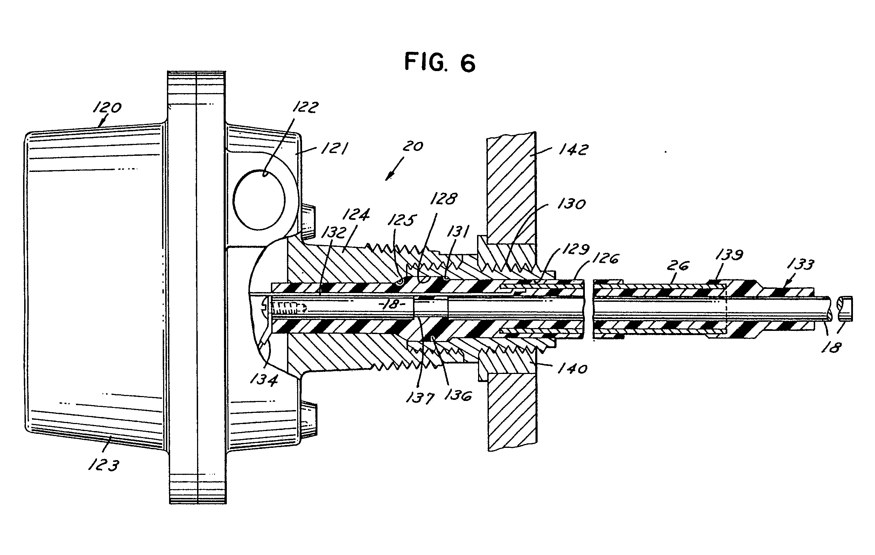

Fig. 1 illustrates a presently preferred embodiment of the material level indicating system of the invention as comprising an rf oscillator 10 which provides a periodic signal at a first output to a phase shift (90°) amplifier 12. The sinusoidal output of amplifier 12 is connected to an adjustable parallel LC resonant circuit 14. Resonant circuit 14 is connected to the probe conductor 18 of a probe assembly 20 (Figs. 1 and 6) mounted in the side wall of a storage vessel 22. The output of amplifier 12 is also connected through a unity gain amplifier 24 having low output impedance to the guard shield 26 of probe assembly 20. The wall of vessel 22, which may be a storage bin for solid materials or a liquid storage tank, is connected to ground. As is well-known in the art, the capacitance between probe conductor 18 and the grounded wall of vessel 22 varies with the level of the material 28 stored therein and with material dielectric constant. This variation in the capacitance is sensed by the remainder ·of the system electronics to be described and provides the desired indication of material level. Guard shield 26, which is energized by amplifier 24 at substantially the same voltage and phase as probe conductor 18, functions to prevent leakage of probe energy through material coated onto the probe surface, and thus to direct probe radiation outwardly into the vessel volume so as to be more closely responsive to the level of material stored therein.

The sinusoidal output of amplifier 12 is fed through a zero crossing detector (phase detection means) 30 to one input of a phase detector 32. Phase detector 32 receives a square wave second input from a second output of oscillator 10 180° out of phase with the oscillator output directed to amplifier 12. A first output of phase detector 32, which is a d.c. signal at a level proportional to the phase relationship between the respective inputs, and thus responsive to variations in phase angle of the oscillator probe drive output due to changes in probe capacitance, is fed to an automatic calibration circuit 34. A second output of phase detector 32, which is also a d.c. signal indicative of input phase relationship, is directed to one input of a threshold detector 36. The outputs of phase detector 32 are identical but effectively isolated from each other for reasons that will become apparent. Automatic calibration circuit (identifying means) 34 provides a control input to adjustable LC resonant circuit 14 which receives a second input for adjustment purposes from oscillator 10. Calibration circuit 34 also provides a reference input to threshold detector 36. The output of threshold detector 36 is fed through material level indicating circuitry 38 to external circuitry for controlling and/or indicating vessel material level as desired.

In general, automatic calibration circuitry 34 functions to adjust the resonance characteristics of resonant circuit 14 during a calibration mode of operation initiated by an operator push-button 40 connected thereto so as to establish, in effect, a reference capacitance level indicative of a preselected material condition in vessel 22 which exists during the automatic calibration mode. Preferably, the level of material in vessel 22 is first raised (by means not shown) to the level of probe assembly 20 and then lowered so as to be spaced from the probe assembly. If material 28 is of a type which coats the probe assembly, such coating will remain on the probe and be taken into consideration during the ensuing calibration operation. With the material level lowered, an operator may push button 40 to initiate the automatic calibration mode of operation. The resonance characteristics of circuit 14 are then automatically varied or adjusted by calibration circuit 34 until the output of phase detector 32 indicates that the return signal from the parallel combination of resonant circuit 14 and capacitance probe 20 bears a preselected phase relationship to the oscillator reference input to phase detector 32, which phase relationship thus corresponds to an effective reference capacitance level at calibration circuit 34 indicative of a low material level.

Thereafter, during the normal operating mode, the output of phase detector 32 is compared in threshold detector 36 to a reference input from calibration circuit 34 indicative of the reference capcitance level, and threshold detector 36 provides an output to material level indicating circuitry 38 when the sensed capacitance exceeds the reference capacitance level by a predetermined amount which is selected as a function of material dielectric constant. If probe 20 is placed in the upper portion of vessel 22 as shown in Fig. 1, such proximity would normally indicate a full tank condition.

If, on the other hand, probe 20 is disposed in the lower portion of tank 22, material would normally be in proximity to the probe assembly, and indeed would normally cover the probe assembly, so that absence of such proximity would indicate an empty tank condition.

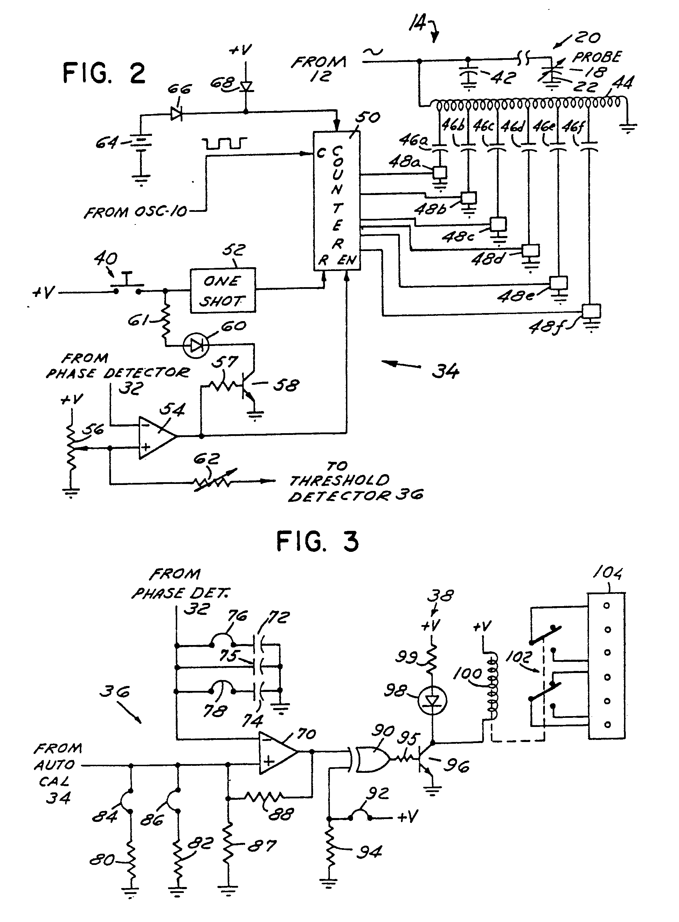

Fig. 2 illustrates a presently preferred embodiment of automatic calibration circuitry 34 and adjustable LC resonant circuit 14. Resonant circuit 14 includes a fixed capacitor 42 and an inductance 44 connected in parallel with probe conductor 18 across the output of amplifier 12, i.e. between the amplifier output and ground. Inductance 44 comprises a plurality of inductor coils or windings having a number of connection taps at electrically spaced positions among the inductor coil turns. A plurality of fixed capacitors 46a—46f are each electrically connected in series with a respective controlled electronic switch 48a—48f between a corresponding connection tap on inductance coil 44 and electrical ground. Switches 48a—48f may comprise any suitable electronic switches and are normally open in the absence of a control input. A digital counter 50 receives a count input from oscillator 10 and provides a plurality of parallel digital outputs each indicative of a corresponding bit of the count stored in counter 50. Each data bit output of counter 50 is connected to control a corresponding electronic switch 48a—48f for selectively connecting or disconnecting the corresponding capacitor 46a—46f in resonant circuit 14 as a function of the state of the counter output bit.

Most preferably, and in accordance with an important feature of the preferred embodiment illustrated in the invention of Fig. 2, the capacitance values of capacitors 46a—46f and the number of coil turns separating the connection taps of inductance 44 are selected such that the effective capacitance added to the parallel LC resonant circuit 14 by each capacitor 46a—46f corresponds to the numerical significance of the corresponding counter output. That is, assuming that counter 50 is a binary counter with outputs connected to switches 48a—48f in reverse order of significance, the values of capacitors 46e, 46f and the number of turns at inductance 44 therebetween are selected such that the effective capacitance connected in parallel with fixed capacitor 42 and probe 20 is twice as much when switch 48e only is closed as when switch 48f only is closed. Likewise, the effective capacitance added by switch 48a and capacitor 46a is thirty-two times the effective value of capacitor 46f and switch 48f. It will be appreciated that inductance 44 functions as an autotransformer so as to establish the effective capacitance of each capacitor 46 as a function of the corresponding connection point among the inductance coils. It will also be appreciated that the number of inductance connection taps may be less than the number of capacitors 46a—46f, with two or more capacitors connected to one tap. The values of capacitors connected to a common tap should differ by multiples of approximately two in correspondence with the significance of the control bits from counter 50.

Automatic calibration circuit 34 illustrated in Fig. 2 includes a one shot 52 which receives an input from operator push-button 40 and provides an output to the reset input of counter 50 in resonant circuit 14 to initiate the automatic calibration mode of operation. A differential comparator (comparison means) 54 has an inverting input connected to the output of phase detector 32 and a non-inverting input connected to the wiper of a variable resistor 56. Resistor 56 is connected across a source d.c. potential. The output of comparator 54 is connected to the enabling input of counter 50 in resonant circuit 14. The output of comparator 54 is also connected through a resistor 57 to the base of an NPN transistor 58 which functions as an electronic switch having collector and emitter electrodes connected in series with an LED 60, a resistor 61 and operator switch 40 across a source of d.c. potential. The non-inverting input of comparator 54 is also connected through an adjustable resistor 62 to threshold detector 36 (Figs. 1 and 3).

Depression of switch 40 by an operator initiates the automatic calibration procedure by clearing or resetting counter 50. All capacitors 46 are disconnected from resonant circuit 14. With material coated on the proble, circuit operation is substantially removed from resonance on the "inductive" side, and the output from phase detector 32 to comparator 54 is high. Differential comparator 54 thus provides a low output to the enabling input of counter 50 and to the base of transistor 58, so that transistor 58 is biased for non-conduction and de-energizes LED 60. With counter 50 so reset and enabled, the pulsed counter input from oscillator 10 advances the count in counter 50, and thereby sequentially and selectively connects the various capacitors 46a—46f into the parallel LC resonant circuit as controlled by switches 48a—48f. As previously indicated, the effective capacitance added by connection of each capacitor is directly related and proportional to the numerical significance of the corresponding bit in counter 50.

As capacitors 46 are added in parallel connection with inductance 44, capacitor 42 and probe 20, and as the parallel combination approaches resonance at the frequency of oscillator 10, the output of phase detector 32 decreases toward the reference level determined by the setting of variable resistor 56 at the non-inverting input of differential comparator 54. Resistor 56 is preferably factory set to correspond with a resonance condition at circuit 14 for a low-level or "empty-vessel" nominal capacitance with no coating on probe 20 and all capacitors 46a—46f in circuit. The empty-tank capacitance at probe 20 may be 15 picofarads, for example. When the output of phase detector 32 reaches this reference capacitance level input to comparator 54, which is preferably at substantially the resonance condition of the LC resonant circuit, the output of differential amplifier 54 switches to a high or one logic stage. Further operation of counter 50 is inhibited and LED 60 is illuminated through transistor 58 so as to indicate to an operator that the calibration operation has been completed. The operator may then release switch 40. Thus, the resonance circuit is designed to be at resonance with all capacitors 46a—46f in circuit and the probe uncoated. The automatic calibration operation functions to delete one or more capacitors 46a—46f from the parallel resonance circuit to compensate for the coating on the probe, cable capacitance, tank geometry, parasitic capacitance, and variations in probe insertion length and circuit operating characteristics.

All of the circuitry hereinabove (and hereinafter) described receive input power from a suitable power supply (not shown) energized by a utility power source. Preferably, adjustable LC resonant circuit 14 further includes a battery 64 connected by the blocking diodes 66, 68 in parallel with the power supply d.c. voltage to the power input terminal of counter 50 so as to maintain the calibration count therein in the event of power failure.

Referring now to Fig. 3, threshold detector 36 includes a differential comparator (comparison means) 70 having an inverting input connected to the second output of phase detector 32 (Fig. 1) and a non-inverting input connected through adjustable resistor 62 (Fig. 2) to reference-indicating adjustable resistor 56. A pair of capacitors 72, 74 are connected through corresponding jumpers 76, 78 between the inverting input of comparator 70 and ground. A third capacitor 75 is also connected between the inverting input of comparator 70 and ground. Capacitors 72, 74, 75 and jumpers 76, 78 provide a factory-selectable or field-selectable adjustable delay in operation of threshold detector 36 so that a transient condition will not result in an erroneous indication of change of material level. The phase detector outputs are isolated as previously described so that delay capacitors 72, 74, 75 will not affect operation in the calibration mode. A pair of resistors 80, 82 are connected by corresponding jumpers 84, 86 between the non-inverting input of comparator 70 and ground. A third resistor 87 is directly connected between the non-inverting comparator input and ground. Resistors 80, 82, 87 and jumpers 84, 86 cooperate with resistor 62 (Fig. 2) to provide factory or field selectable adjustment of the capacitance differential sensed by threshold detector 36 between the reference set by resistor 56 (Fig. 2) and the material-proximate material level which probe 20 is intended to indicate.

More specifically, with probe assembly 20 mounted in the upper portion of vessel 22 as illustrated in Fig. 1, the difference between the capacitance at probe 20 corresponding to the reference level of resistor 56 with the material at low level and a full-tank capacitance is the capacitance increase caused by rise in material level into proximity with the capacitance probe. Resistors 80, 82, 87 and jumpers 80, 84 effectively select the capacitance differential to be sensed between low and high material level conditions. For a material of low dielectric constant such as cement, jumpers 84, 86 are removed and a threshold level corresponding to a capacitance differential of four picofarads, for example, is established by resistors 62, 87. For a material of medium dielectric constant such as acetone, jumper 84 may be added so that resistors 80, 87 in parallel establish a higher capacitance differential of eight picofarads, for example, corresponding to the same high material level. A still higher capacitance differential may be established with jumper 84 removed and jumper 86 intact. For materials of relatively high dielectric constant such as glycerine, both jumpers 84, 86 may remain intact, so that resistors 80, 82, 87 in parallel establish a maximum capacitance differential of twenty picofarads, for example.

When the output from phase detector 32 decreases from the empty tank near-resonance point established as a result of the automatic calibration operation previously described to a level established by resistors 56, 62, 80, 82 and/or 87, the output of differential comparator 70 switches from a low or logical zero level to a high or logical one level, thereby indicating proximity of material to the probe assembly. A resistor 88 is connected between the output of comparator 70 and the non-inverting input thereof to establish a hysteresis in comparator operation and thereby avoid intermittent switching of comparator output at a borderline material level condition. The output of differential comparator 70 is also connected in material level indicating circuitry 38 to one input of an exclusive-or gate 90. The second input of gate 90 is connected through a jumper 92 to the positive voltage supply and through a resistor 94 to ground. The output of gate 90 is connected through a resistor 95 to the base of an NPN transistor 96 which functions as an electronic switch to illuminate an LED 98 through a resistor 99 and to energize a relay coil 100 when the output of gate 90 assumes a high or logical one condition. The contacts 102 associated with relay coil 100 are connected to corresponding terminals of a terminal block 104 for connection to external circuitry as previously described.

Jumper 92 and resistor 94 cooperate with gate 90 for selecting either low level or high level fail safe operation of material level indicating circuitry 38. That is, jumper 92 and resistor 94 cooperate with gate 90 to de-energize relay coil 100 at either a high level condition (material proximate to probe 20) or a low level condition (material spaced from probe 20). In this way, the selected high level or low level condition will also be indicated to the external circuitry independently of actual material level in the event that relay coil 100 is de-energized by a power failure or the like. As previously indicated, the output of comparator 70 assumes a high or logical one voltage level when material 28 is in proximity to probe 20 (Fig. 1). If low level fail safe operation is desired, which means that relay 100 will de-energize to indicate a low material level, jumper 92 is removed so as to place a low or logical zero at the second input of gate 90. In this configuration, the output of gate 90 follows the first input from comparator 70 to illuminate LED 98 and energize relay coil 100 whenever material is in proximity to the capacitance probe, and to de-energize the LED and relay coil when material is spaced from the probe (low level). On the other hand, in high level fail safe operation with jumper 92 left intact, a high or logical one voltage level is placed at the second input of gate 90, so that the gate output is the inverse of the first input from comparator 70. LED 98 is thus illuminated and relay coil 100 energized when the level of material is remote from the sensor probe (low level) and de-energized when the material is in proximity to the probe (high level).

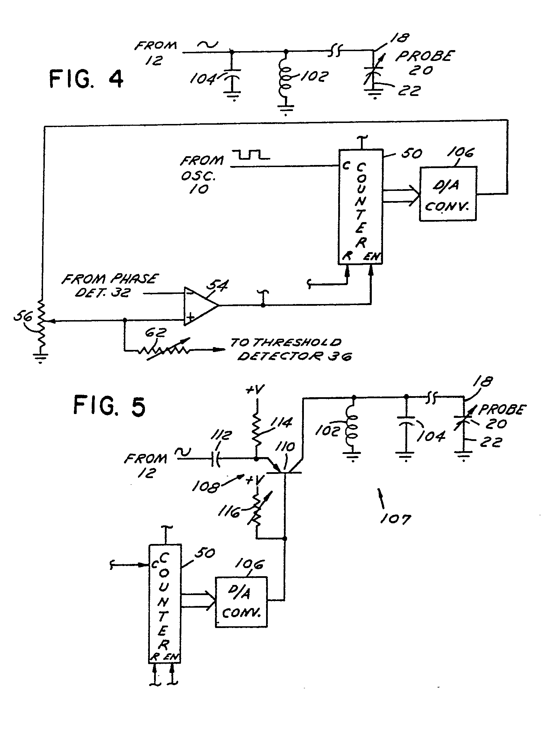

Figs. 4 and 5 illustrate respective modifications to the preferred embodiment of the invention hereinabove described. Only the differences between the respective modifications and the preferred embodiment are illustrated in Figs. 4 and 5 and described hereinafter. In the modification of Fig. 4, the adjustable LC resonant circuit of the preferred embodiment is replaced by a non-adjustable resonant circuit comprising a fixed capacitor 104 and a fixed inductor 102 connected in parallel with each other and with probe 20. Most preferably, capacitor 104 and inductor 102 are selected so as to exhibit resonance at the frequency of oscillator 10 in combination with an empty-tank capacitance at probe 20 (uncoated), such as fifteen picofarads for example. The bit-parallel data output of counter 50 is fed to a digital-to-analog converter 106 which provides an analog output voltage to reference resistor 56 in place of the fixed power supply voltage in the preferred embodiment of the invention previously described so as to vary the reference input voltage to comparator 54 as a function of the count in counter 50. Differential comparator 54 receives inputs from phase detector 32 and reference resistor 56, and terminates operation of the automatic calibration mode by removing the enabling input from counter 50 when the reference voltage supplied by resistor 56 to the inverting input of comparator 54 is equal to the output from phase detector 32 corresponding to the coated probe empty vessel calibration condition at probe 20. The corresponding count in counter 50 is held and the output of d/a converter 106 thereafter remains constant so as to provide an empty-tank reference voltage to threshold detector 36 as previously described. Thus, the reference level supplied by resistors 56, 62 to threshold detector 36 (Figs. 1 and 3) in the modified calibration circuit of Fig. 4 indicates both empty-tank probe capacitance and any addition thereto caused by material coated on the probe and not effectively blocked by guard shield 26.

Fig. 5 illustrates a modified adjustable resonant circuit 107 which includes a source 108 of direct current controlled by the output of d/a converter 106 and connected to coil 102 for varying the effective inductance thereof as a function of the count in counter 50. Current source 108 includes a PNP transistor 110 having an emitter connected through a capacitor 112 to the output of amplifier 12 (Fig. 1) and through a resistor 114 to a positive d.c. voltage source. The base of transistor 110 is connected to the output of d/a converter 106 and through a resistor 116 to the voltage source. The collector of transistor 110 is connected to the parallel resonant circuit comprising inductor 102, capacitor 104 and probe 20. As the count in counter 50 increases during the automatic calibration mode, the direct current fed by transistor 110 to coil 102 decreases correspondingly, and thereby decreases the effective a.c. inductance of coil 102 to compensate for increased probe capacitance caused by material coating. When the effective inductance is decreased to a point where the parallel combination of capacitance 104, inductor 102 and coated probe 20 are substantially at resonance, operation of counter 50 is terminated by differential comparator 54 (Fig. 2) in the manner previously described. Resistor 116 may be variable for factory adjustment of current source gain.

Fig. 6 illustrates a presently preferred embodiment of probe assembly 20 in accordance with the invention as comprising a closed metal housing 120 which has a base 121 and a cover 123 separable therefrom. The system electronics hereinabove described are preferably disposed within housing 120 and connected through the opening 122 in base 121 for receiving power from a source remote from the probe assembly, for receiving a calibration signal from switch 40 (Figs. 1 and 2) which may also be located remotely of the probe assembly, and for connection of terminal block 104 (Fig. 3) to external circuitry.

A hollow nipple 124 projects from housing base 121. The housing-remote end of nipple 124 is internally threaded up to an inwardly tapering shoulder 125 coaxial with nipple 124. A hollow externally threaded adapter 130 is received within nipple 124. The interior of adapter 130 is formed at a first diameter 128 which blends into a second smaller diameter 129 by means of a tapering shoulder 131. Diameters 128, 129 and shoulder 131 are coaxial in assembly with nipple 124. The housing-remote end of adapter 130 is adapted to be threadably received into an internally threaded gland 140 mounted on the side or top wall of a material storage vessel 142 so that probe rod 20 and guard shield 26 project internally of the vessel as shown in Fig. 1.

Sealingly captured by nipple 124 and adapter 130 is a probe subassembly 133 comprising the probe measurement element 18, the guard shield 26 and a one-piece unitarily formed body of insulating material 126 formed therearound and therebetween. More specifically, measurement element 18 comprises a solid rod of conductive non-corrosive metallic material such as stainless steel having an internally threaded opening at one end adapted for connection as at 134 within housing 120 to adjustable resonant circuit 14 (Fig. 1). Guard shield 26 comprises a hollow cylindrical tube of conductive metallic material such as stainless steel co-axially surrounding and radially spaced from probe rod 18. Guard shield 26 in the preferred embodiment of the drawing is substantially shorter in the axial dimension than is probe rod 18 and is spaced intermediate the rod ends. The guard shield extends from a position located radially inwardly of the housing-remote end of adapter 130 to a point spaced from the housing-remote end of probe rod 18. An insulated conductor 132 is soldered or otherwise electrically connected to guard shield 26 and extends along rod 18 into housing 120 for connection to amplifier 24 (Fig. 1) separately from the rod element.

Insulating material 126 includes a first portion surrounding probe rod 18 internally of guard shield 26 and a second portion externally surrounding guard shield 26. The housing-remote end of probe rod 18 is exposed, i.e. not covered by insulating material. Insulating material 126 surrounds and radially overlaps axially spaced ends of guard shield 26, with a circumferentially continuous portion of the guard shield intermediate its ends being exposed from the radial direction, i.e. not covered by insulating material. In particular, insulating material is integrally formed as a circumferentially continuous lip 139 to radially overlap and sealingly capture the housing-remote end of guard shield 26. A circumferentially continuous radial shoulder 136 is formed on insulating material 126, and has tapering axial faces which are sealingly captured in assembly between shoulder 125 on nipple 124 and shoulder 131 on adapter 130. A circumferential notch 137 preformed on rod 18 is filled with insulating material radially inwardly of shoulder 136 to hold the rod in axial position. It will be appreciated that the body of insulating material 126 illustrated in the drawing is symmetrical about the probe axis.

To manufacture probe assembly 20, guard shield 26 (with conductor 132 attached) and probe rod 18 are first fixtured in coaxial orientation within a suitable mold (not shown). Insulating material 126 is then unitarily formed in a single operation as an integral structure by injection molding the material around and between the guard and probe elements as described. As the insulating material cools and shrinks, the lip 139 thereof which radially overlaps the housing-remote end of guard shield 26 squeezes the guard shield edge so as to form a tight, pressure resistant seal. It will be appreciated that the lengths of shield 26 and probe rod 18 are chosen depending upon application. Any suitable heat-resistant and non-corrosive material may be used for insulating material 126. Material marketed by Phillips Petroleum Company under the trademark RYTON is presently preferred.

The several embodiments of the invention exhibit a number of significant advantages over prior art devices of similar type. For example, responsiveness of the material level detection circuitry to phase angle of the probe signal rather than to amplitude thereof renders the level detection circuitry substantially unresponsive to variations in conductivity of the material caused by varying moisture content, etc. All embodiments may be readily recalibrated at any time by an operator by merely depressing switch 40 (Figs. 1 and 2) and holding the switch depressed until LED 60 (Fig. 2) illuminates. The indicators may be manufactured to be identical at the factory and modified to suit particular applications in the field by removing one or more jumpers 76, 78, 84, 86 according to prespecified factory directions. This feature reduces the number of models which must be stocked by a distributor.

## Claims

1. A system for indicating the level of material (28) in a vessel (22) comprising a resonant circuit (14, 20) including a capacitance probe (20) adapted to be disposed in the vessel so as to be responsive to variations in capacitance as a function of material level in said vessel, oscillator means (10) coupled to said resonant circuit (14, 20) including said capacitance probe (20), phase detection means (32) responsive to variations in phase angle at said oscillator means as a function of probe capacitance, means (34) for identifying a reference capacitance indicative of a predetermined level of material in said vessel, and means (36, 38) responsive to said phase detection means (32) and to the identifying means (34) for indicating material level in said vessel as a function of a difference between said probe capacitance and said reference capacitance, characterized in that said identifying means (34) comprises comparison means (54) having a first input responsive to said phase detection means (32), a second input and an output responsive to a comparison between said first and second inputs, reference means (56) connected to said second input and indicative of said reference capacitance, and means (44 through 50 or 50, 106 or 50 and 106 through 114) for varying operating characteristics of said resonant circuit (14, 20) or said reference means (56), to obtain a predetermined comparison between said first and second inputs, the output of said comparison means (54) being connected to the operating characteristics varying means.

2. The system set forth in claim 1 characterized in that said identifying means (34) comprises automatic calibration means including means (40) for initiating a calibration operation, means responsive to the initiating means for continuously varying said operating characteristics of said resonant circuit (14, 20) or said reference means (56), and means responsive to said output of said comparison means (54) for terminating said calibration operation, when said output indicates said predetermined comparison between said first input from said phase detection means (32) and said second input from said reference means (56).

3. The system set forth in claim 2 characterized in that said automatic calibration means comprises variable second capacitance means separate from said probe (20) and connected to said resonant circuit (14, 20) such that operating characteristics of said resonant circuit (14, 20) vary independently as functions of probe capacitance and said second capacitance, and means (48a through 48f and 44) for automatically varying said second capacitance means independently of said probe (20) during said calibration operation.

4. The system set forth in claim 2 characterized in that said means responsive to the initiating means (40) comprises counter means (50) including means (52) responsive to said initiating means (40) for resetting said counter means, said automatic calibration means further comprising means responsive to said comparison means (54) for enabling operation of said counter means (50) during said calibration operation, and means (10) for varying the count in said counter means during said calibration operation, and means (44 through 48 or 106 or 106 through 114) responsive to the count in said counter means for varying said operating characteristics of said resonant circuit (14, 20) or said reference means (56).

5. The system set forth in claim 4 wherein the count-responsive means comprises means (44 through 48 or 106 through 114) for varying resonance characteristics of said resonant circuit as a function of said count.

6. The system set forth in claim 5 characterized in that said resonant circuit comprises capacitance means and inductance means (44) connected in parallel with said capacitance probe (20), and in that said count responsive means includes means for varying capacitance of said capacitance means.

7. The system set forth in claim 6 characterized in that said capacitance means comprises a plurality of capacitors (46a through 46f), and in that said count-responsive means includes switch means (48a through 48f) responsive to said counter means (50) for selectively connecting said plurality of capacitors into said resonant circuit.

8. The system set forth in claim 7 characterized in that said inductance means (44) comprises an inductor coil having a plurality of coil turns, and in that said plurality of capacitors (46a through 46f) are connected at electrically spaced locations among said plurality of coil turns such that capacitance of said capacitance means varies in response to said switch means (48a through 48f) as a conjoint function of nominal capacitance of said capacitors and connection of said capacitors among said plurality of turns.

9. The system set forth in claim 8 characterized in that said counter means (50) comprises a digital counter having a plurality of outputs indicative of corresponding count bits in an order of numerical significance, in that said switch means (48a through 48f) comprises a plurality of electronic switches each selectively controlled by a corresponding said counter output, and in that said plurality of capacitors (46a through 46f) are connected to said switches and to said spaced locations so as to vary said capacitance as a direct function of numerical significance of the corresponding counter output.

10. The system set forth in claim 5 characterized in that said resonant circuit means comprises capacitance means (104) and inductance means (102) connected in parallel with said capacitance probe (20), and in that said count-responsive means includes means (106 through 114) for varying inductance at said inductance means.

11. The system set forth in claim 10 characterized in that said count-responsive means comprises means (106 through 114) for applying a variable direct current to said inductance means as a function of said count.

12. The system set forth in claim 11 characterized in that said counter means (50) comprises a digital counter, and in that said count-responsive means comprises a variable direct current source including a transistor (110) operatively connecting said inductance means (102) to a source of d.c. potential and digital-to-analog converter means (106) connecting the counter output to the control electrode of said transistor.

13. The system set forth in claim 12 characterized by further comprising means (12, 112) for connecting said oscillator means (10) to said resonant circuit through said transistor (110).

14. The system set forth in claim 4 characterized in that the count-responsive means comprises means (106) for varying said reference means (56) connected to said second input of said comparison means (54) as a function of said count.

15. The system set forth in claim 14 characterized in that said comparison means (54) comprises means responsive to a difference in voltage between said first input from said phase detection means (32) and said second input from said reference means (56), and in that said count responsive means (106) comprises means for varying the reference voltage applied to said second input by said reference means (56).

16. The system set forth in claim 15 characterized in that said counter means (50) includes a digital counter, and in that said count-responsive means (106) includes digital-to-analog converter means for applying an analog voltage to said second input as a function of said count.

17. The system set forth in any preceding claim 5 to 16 characterized by further comprising means including a battery (64) coupled to said counter means (50) for maintaining calibration count in said counter means in the event of power failure.

18. The system set forth in any preceding claim 2 to 17 characterized in that said means (40) for initiating a calibration operation includes an operator-responsive manual push button.

19. The system set forth in claim 18 further comprising indicator means (60) and means (58) connecting said indicator means to said output of said comparison means (54) for indicating duration of a calibration operation.

20. The system set forth in claim 19 characterized in that said means (58) connecting said indicator means comprises a solid state switch having a contact path and a control electrode said control electrode being connected to said output of said comparison means, and in that said indicating means (60) comprises an LED connected in series with the contact path of said solid state switch and said push button (40) across a source of d.c. power.

21. The system set forth in any preceding claim characterized in that said means (36, 38) responsive to said phase detection means (32) and said calibration means (34) comprises comparison means (70) having a first input connected to said phase detection means (32), a second input connected to said identifying means (34), and an output which varies between first and second digital states as a function of a threshold difference between said first and second inputs.

22. The system set forth in claim 21 further characterized by means (62, 80 through 86) for selectively varying said threshold difference.

23. The system set forth in claim 22 characterized in that the last-named means comprises at least one resistor (80, 82) and means (84, 86) for selectively connecting said at least one resistor across said second input.

24. The system set forth in claim 21 characterized by further comprising means (75) connected between said phase detection means (32) and said comparison means (70) for delaying operation of said comparison means (70) in response to the output of said phase detection means (32) for a selected delay time.

25. The system set forth in claim 24 characterized by further comprising means (72, 74, 76, 78) for selectively varying said delay time.

26. The system set forth in claim 25 wherein the last-named means comprises at least one capacitor (72, 74) and means (76, 78) for selectively connecting said at least one capacitor to said comparison means (70).

27. The system set forth in claim 21 through 26 characterized by further comprising fail safe means (90 through 94) including exclusive-or means (90) having a first input connected to said output of said comparison means (70) and a second input, and means (92, 94) for selectively connecting said second input to either a high level or a low level digital signal.

28. The system set forth in claim 27 characterized by further comprising relay means (100, 102) connected to said output of said exclusive-or means (90) for indicating material level.

**Patentansprüche**

1. Anordnung zum Messen des Materialstandes in einem Behälter (22), bestehend aus einem Resonanzkreis (14, 20) mit einem kapazitiven, in dem Behälter angeordneten, auf Kapazitätsänderungen infolge des Materialstandes im Behälter ansprechenden Wandler (20), einem an den Resonanzkreis (14, 20) einschießlich des Wandlers (20) angeschlossenen Oszillator (10), einem auf Änderungen des Phasenwinkels am Oszillator abhängig von der Wandlerkapazität ansprechenden Phasendetektor (32), Mitteln (34) zum Identifizieren einer einen vorbestimmten Materialstand im Behälter anzeigenden Referenzkapazität und Mitteln (36, 38), die auf den Phasendetektor (32) und die Identifiziermittel (34) zum Anzeigen des Materialstandes behälterabhängig von einem Unterschied zwischen der Wandlerkapazität und der Referenzkapazität ansprechen, dadurch gekennzeichnet, daß die Identifiziermittel (34) eine Vergleichsstufe (54) aufweisen, deren erster Eingang vom Signal des Phasendetektors (32) belegt ist und dessen Ausgang von einem Vergleich zwischen dem ersten Eingang und einem zweiten Eingang abhängig ist, daß an den zweiten Eingang der Referenzkapazität entsprechende Referenzmittel (56) angeschlossen sind und daß Mittel (44—50 bzw. 50, 106, bzw. 50 und 106—114) zum Verändern der Betriebseigenschaften des Resonanzkreises (14, 20) bzw. der Referenzmittel (56) vorgesehen sind, um einen bestimmten Vergleich zwischen dem ersten und zweiten Eingang zu erhalten, wobei der Ausgang der Vergleichsstufe (54) mit den Mitteln zum Ändern der Betriebseigenschaften verbunden ist.

2. Anordnung nach Anspruch 1, dadurch gekennzeichnet, daß die Identifiziermittel (34) aus einer automatischen Kalibrierstufe mit Mitteln (40) zum Auslösen eines Abgleichvoranges bestehen, daß auf die Auslösemittel ansprechende Mittel zum kontinuierlichen Verändern der Betriebseigenschaften des Resonanzkreises (14, 20) bzw. der Bezugsmittel (56) vorgesehen sind, und daß auf den Ausgang der Vergleichsstufe (54) ansprechende Mittel zum Beenden des Abgleichvorganges vorgesehen sind, wenn der Ausgang den vorbestimmten Vergleich zwischen dem ersten Eingang von dem Phasendetektor (32) und dem zweiten Eingang von den Bezugsmitteln (56) anzeigt.

3. Anordnung nach Anspruch 2, dadurch gekennzeichnet, daß die automatische Kalibrierstufe aus getrennt von dem Wandler (20) vorgesehen, veränderlichen zweiten Kapazitätsmitteln besteht, die an den Resonanzkreisen (14, 20) derart angeschlossen sind, daß die Betriebseigenschaften des Resonanzkreises (14, 20) unabhängig als Funktionen der Wandlerkapazität und der zweiten Kapazität veränderlich sind, und daß Mittel (48a—48f und 44) zum automatischen Ändern der zweiten Kapazitätsmittel unabhängig vom Wandler (20) während des Abgleichvorganges vorgesehen sind.

4. Anordnung nach Anspruch 2, dadurch gekennzeichnet, daß die auf die Auslösemittel (40) ansprechenden Mittel einen Zähler (50) mit auf die Auslösemittel (40) ansprechenden Mitteln (52) aufweisen, um den Zähler zurückzusetzen, daß die automatischen Kalibriermittel außerdem auf die Vergleichsstufe (54) ansprechende Mittel zum Inbetriebsetzen des Zählers (50) während des Abgleichvorganges aufweisen, daß Mittel (10) zum Verändern des Zählerstandes in dem Zähler während des Abgleichvorganges vorgesehen sind und daß auf den Zählerstand in den Zähler ansprechende Mittel (44—48 bzw. 106 bzw. 106—114) zum Ändern der Betriebseigenschaften des Resonanzkreises (14, 20) oder der Bezugsmittel (56) vorgesehen sind.

5. Anordnung nach Anspruch 4, dadurch gekennzeichnet, daß die auf den Zählerstand ansprechenden Mittel Mittel (44—48 bzw. 106— 114) zum Ändern der Resonanzeigenschaften des Resonanzkreises abhängig vom Zählerstand aufweisen.

6. Anordnung nach Anspruch 5, dadurch gekennzeichnet, daß der Resonanzkreis Kapazitätsmittel und Induktivitätsmittel (44) aufweist, die zur Wandlerkapazität (20) parallel geschaltet sind und daß die auf den Zählstand ansprechenden Mittel Mittel zum Ändern der Kapazität der Kapazitätsmittel aufweisen.

7. Anordnung nach Anspruch 6, dadurch gekennzeichnet, daß die Kapazitätsmittel mehrere Kondensatoren (46a—46f) aufweisen und daß die auf den Zählstand ansprechenden Mittel Schalter (48a—48f) aufweisen, die auf den Zähler (50) ansprechen, um mehrere Kondensatoren an den Resonanzkreis wahlweise anzuschalten.

8. Anordnung nach Anspruch 7, dadurch gekennzeichnet, daß die Induktivitätsmittel (44) eine Spule mit mehreren Windungen aufweisen und daß mehrere Kondensatoren (46a—46f) an elektrisch beabstandeten Stellen der Windungen derart angeschlossen sind, daß die Kapazität der Kapazitätsmittel entsprechend den Schaltern (48a—48f) als gemeinsame Funktion der nominellen Kapazität der Kondensatoren und dem Anschluß der Kondensatoren an die Windungen veränderlich ist.

9. Anordnung nach Anspruch 8, dadurch gekennzeichnet, daß der Zähler (50) eine digitale Bauweise aufweist mit mehreren Ausgängen, welche die entsprechenden Zählerbits in der Reihenfolge ihrer numerischen Significanz anzeigen, daß die Schalter (48a—48f) aus mehreren Halbleiterschaltern bestehen, von denen jeder von einem entsprechenden Zählerausgang ansteuerbar ist, und daß mehrere Kondensatoren (46a—46f) an die Schalter und an die beabstandeten Stellen angeschlossen sind, um die Kapazität als direkte Funktion der numerischen Signifikanz des entsprechenden Zählerausgangs zu verändern.

10. Anordnung nach Anspruch 5, dadurch gekennzeichnet, daß der Resonanzkreis Kapazitätsmittel (104) und Induktivitätsmittel (102) aufweist, die mit der Wandlerkapazität (20) parallel geschaltet sind und daß die auf den Zählerstand ansprechenden Mittel Mittel (106—114) zum Verändern der Induktivität der Induktivitätsmittel aufweisen.

11. Anordnung nach Anspruch 10, dadurch gekennzeichnet, daß die auf den Zählerstand ansprechenden Mittel Mittel (106—114) zum Aufschalten einer veränderlichen Gleichspannung an die Induktivitätsmittel als Funktion des Zählerstandes aufweisen.

12. Anordnung nach Anspruch 11, dadurch gekennzeichnet, daß der Zähler (50) eine digitale Bauweise aufweist und daß die auf den Zählerstand ansprechenden Mittel eine veränderliche Gleichspannungsquelle mit einem Transistor (110) aufweisen, der die Induktivitätsmittel (102) an eine Gleichspannungsquelle anschaltet und ein Digital-Analog-Wandler (106) den Zählerausgang an die Steuerelektrode des Transistors anschaltet.

13. Anordnung nach Anspruch 12, gekennzeichnet durch Mittel (12, 112) zum Anschalten des Oszillators (10) an den Resonanzkreis über den Transistor (110).

14. Anordnung nach Anspruch 4, dadurch gekennzeichnet, daß die auf den Zählerstand ansprechenden Mittel Mittel (106) zum Verändern der an den zweiten Eingang der Vergleichsstufe (54) angeschlossenen Referenzmittel (56) als Funktion des Zählerstandes aufweisen.

15. Anordnung nach Anspruch 14, dadurch gekennzeichnet, daß die Vergleichsstufe (54) auf einen Spannungsunterschied zwischen dem ersten Eingang von dem Phasendetektor (32) und dem zweiten Eingang von den Referenzmitteln (56) ansprechende Mittel aufweisen und daß die auf den Zählerstand ansprechenden Mittel (106) Mittel zum Verändern der dem zweiten Eingang der Referenzmittel (56) aufgeschalteten Referenzspannung aufweisen.

16. Anordnung nach Anspruch 15, dadurch gekennzeichnet, daß der Zähler (50) eine digitale Bauweise aufweist und daß die auf den Zählerstand ansprechenden Mittel (106) einen Digital-Analog-Wandler zum Aufschalten einer Analogspannung an den zweiten Eingang abhängig von dem Zählerstand aufweisen.

17. Anordnung nach einem der Ansprüche 5 bis 16, gekennzeichnet durch Mittel mit einer an den Zähler (50) angeschlossenen Batterie (64) zum Speichern des Abgliechzählstandes in den Zähler bei Netzspannungsausfall.

18. Anordnung nach einem der Ansprüche 2 bis 17, dadurch gekennzeichnet, daß die Mittel (40) zum Auslösen eines Abgleichvorganges einen von Hand betätigbaren Taster aufweisen.

19. Anordnung nach Anspruch 18, gekennzeichnet durch Anzeigemittel (60) und Mittel (58) zum Anschalten der Anzeigemittel an den Ausgang der Vergleichsstufe (54) zum Anzeigen der Kalibriervorgangsdauer.

20. Anordnung nach Anspruch 19, dadurch gekennzeichnet, daß die Mittel (58) zum Anschalten der Anzeigemittel aus einem Halbleiterschalter mit einem Kontaktpad und einer Steuerelektrode bestehen, der an den Ausgang der Vergleichsstufe angeschlossen ist, und daß die Anzeigemittel (60) ein LED aufweisen, das in Reihe mit dem Kontaktpfad des Halbleiterschalters und dem Taster (40) an eine Gleichspannungsquelle angeschlossen ist.

21. Anordnung nach einem der vorhergehenden Ansprüche, dadurch gekennzeichnet, daß die auf den Phasendetektor (32) und die Kalibriermittel (34) ansprechenden Mittel (36, 38) Vergleichsmittel (70) aufweisen, deren erster Eingang an den Phasendetektor (32), deren zweiter Eingang an die Identifiziermittel (34) angeschlossen ist und deren Ausgang zwischen einem ersten und zweiten digitalen Zustand abhängig von einer Schwellwertdifferenz zwischen dem ersten und zweiten Eingang veränderlich ist.

22. Anordnung nach Anspruch 21, gekennzeichnet durch Mittel (62, 80—86) zum wahlweisen Verändern der Schwellwertdifferenz.

23. Anordnung nach Anspruch 22, dadurch gekennzeichnet, daß die letztgenannten Mittel mindestens einen Widerstand (80, 82) und Mittel (84, 86) zum wahlweisen Anschalten wenigstens eines Widerstandes an den zweiten Eingang aufweisen.

24. Anordnung nach Anspruch 21, gekennzeichnet durch zwischen den Phasendetektor (32) und die Vergleichsstufe (70) geschaltete Mittel (75) zum Verzögern des Betriebes der Vergleichsstufe (70) entsprechend dem Ausgang des Phasendetektors für eine bestimmte Verzögerungszeit.

25. Anordnung nach Anspruch 24, gekennzeichnet durch Mittel (72, 74, 76, 78) zum wahlweisen Verändern der Verzögerungszeit.

26. Anordnung nach Anspruch 25, dadurch gekennzeichnet, daß die letztgenannten Mittel mindestens einen Kondensator (72, 74) und Mittel (76, 78) zum wahlweisen Anschalten wenigstens eines Kondensators an die Vergleichsstufe (70) aufweisen.

27. Anordnung nach Anspruch 21—26, gekennzeichnet durch eine fehlersichere Einrichtung (90—94) mit Exklusiv-Oder-Stufen (90) mit einem ersten an der Ausgang der Vergleichsstufe (70) angeschlossenen Eingang und einem zweiten Eingang und durch Mittel (92, 94) zum wahlweisen Anschalten des zweiten Eingangs entweder an ein hochpegeliges oder ein niederpegeliges digitales Signal.

28. Anordnung nach Anspruch 27, gekennzeichnet durch an den Ausgang der Exklusiv-Oder-Stufen (90) angeschlossenen Relaismittel (100, 102) zum Anzeigen des Materialstandes.

## Revendications

1. Installation destinée à indiquer le niveau d'un matériau (28) dans un réservoir (22), comprenant un circuit résonnant (14, 20) qui comporte une sonde capacitive (20) destinée à être placée dans le réservoir afin qu'elle soit sensible aux variations de capacité en fonction du niveau du matériau dans le réservoir, un oscillateur (10) couplé au circuit résonnant (14, 20), comprenant la sonde capacitive (20), un dispositif (32) de détection de déphasage sensible aux variations de l'angle de phase de l'oscillateur en fonction de la capacité de la sonde, un dispositif (34) destiné à identifier une capacité de référence représentative d'un niveau prédéterminé du matériau dans le réservoir, et un dispositif (36, 38) commandé par le dispositif de détection de déphasage (32) et par le dispositif d'identification (34) destiné à indiquer le niveau du matériau dans le réservoir en fonction d'une différence entre la capacité de la sonde et la capacité de référence, caractérisée en ce que le dispositif d'identification (34) comporte un dispositif de comparaison (54) ayant un premier signal d'entrée qui dépend du dispositif de détection de déphasage (32), un second signal d'entrée et un signal de sortie qui dépend de la comparaison entre les premier et second signaux d'entrée, un dispositif de référence (56) relié à la seconde entrée et représentatif de la capacité de référence, et un dispositif (44 à 50 ou 50, 106 ou 50 et 106 à 114) destiné à faire varier les caractéristiques de fonctionnement du circuit résonnant (14, 20) du dispositif de référence (56) afin qu'une comparaison prédéterminée soit obtenue entre le premier et le second signal d'entrée, le signal de sortie du dispositif de comparaison (54) étant relié au dispositif destiné à faire varier les caractéristiques de fonctionnement.

2. Instalation selon la revendication 1, caractérisée en ce que le dispositif d'identification (34) comporte un dispositif d'étalonnage automatique comprenant un dispositif (40) destiné à déclencher une opération d'étalonnage, un dispositif commandé par le dispositif destiné à déclencher et destiné lui-même à faire varier de façon continue les caractéristiques de fonctionnement du circuit résonnant (14, 20) ou du circuit de référence (56), et un dispositif commandé par le signal de sortie du dispositif de comparaison (54) et destiné à interrompre l'opération d'étalonnage lorsque le signal de sortie indique la comparaison prédéterminée entre le premier signal d'entrée provenant du dispositif de détection de déphasage (32) et le second signal d'entrée provenant du dispositif de référence (56).

3. Installation selon la revendication 2, caractérisée en ce que le dispositif d'étalonnage automatique comporte un second dispositif capacitif variable séparé de la sonde (20) et connecté au circuit résonnant (14, 20) de manière que les caractéristiques de fonctionnement du circuit résonnant (14, 20) varient indépendamment en fonction de la capacité de la sonde et de la seconde capacité, et un dispositif (48a à 48f et 44) destiné à faire varier automatiquement le second dispositif capacitif indépendamment de la sonde (20) pendant l'opération d'étalonnage.

4. Installation selon la revendication 2, caractérisée en ce que le dispositif commandé par le dispositif (40) destiné à déclencher comporte un compteur (50) comprenant un dispositif (52) commandé par le dispositif (40) destiné à déclencher et lui-même destiné à remettre à zéro le compteur, le dispositif d'étalonnage automatique comprenant en outre un dispositif commandé par le dispositif de comparaison (54) et destiné à valider le fonctionnement du compteur (50) pendant l'opération d'étalonnage, et un dispositif (10) destiné à faire varier le nombre du compteur pendant l'opération d'étalonnage, et un dispositif (44 à 48 ou 106 ou 106 à 114) commandé par le nombre contenu dans le compteur et destiné à faire varier les caractéristiques de fonctionnement du circuit résonnant (14, 20) ou du dispositif de référence (56).

5. Installation selon la revendication 4, dans laquelle le dispositif commandé par le nombre comporte un dispositif (44 à 48 ou 106 à 114) destiné à faire varier les caractéristiques de résonance du circuit résonnant en fonction de ce nombre.

6. Installation selon la revendication 5, caractérisée en ce que le circuit résonant comporte un dispositif capacitif et un dispositif inductif (44) montés en parallèle avec la sonde capacitive (20), et en ce que le dispositif commandé par le nombre comporte un dispositif destiné à faire varier la capacité du dispositif capacitif.

7. Installation selon la revendication 6, caractérisée en ce que le dispositif capacitif comporte plusieurs condensateurs (46a à 46f), et en ce que le dispositif commandé par le nombre comprend un dispositif de commutation (48a à 48f) commandé par le compteur (50) et destiné à connecter sélectivement les condensateurs dans le circuit résonnant.

8. Installation selon la revendication 7, caractérisée en ce que le dispositif inductif (44) comporte un enroulement de self ayant plusieurs spires, et en ce que les condensateurs (46a à 46f) sont connectés à des emplacements distants électriquement parmi les spires de manière que la capacité du dispositif capacitif varie en fonction du dispositif de commutation (48a à 48f) sous forme d'une fonction conjointe de la capacité nominale des condensateurs et de la connexion des condensateurs parmi les spires.

9. Installation selon la revendication 8, caractérisée en ce que le compteur (50) est un compteur numérique ayant plusieurs sorties représentatives de bits correspondants, dans un ordre de signification numérique, en ce que le dispositif de commutation (48a à 48f) comporte plusieurs commutateurs électroniques commandés chacun sélectivement par un signal correspondant de sortie du compteur, et en ce que les condensateurs (46a à 46f) sont connectés aux commutateurs et à des emplacements distants afin qu'ils fassent varier la capacité directement en fonction de la signification numérique du signal correspondant de sortie de compteur.

10. Installation selon la revendication 5, caractérisée en ce que le circuit résonnant comporte un dispositif capacitif (104) et un dispositif inductif (102) monté en parallèle avec la sonde capacitive (20), et en ce que le dispositif commandé par un nombre comporte un dispositif (106 à 114) destiné à faire varier la self du dispositif inductif.

11. Installation selon la revendication 10, caractérisée en ce que le dispositif sensible à un nombre comporte un dispositif (106 à 114) destiné à appliquer un courant continu variable au dispositif inductif en fonction dudit nombre.

12. Installation selon la revendication 11, caractérisée en ce que le compteur (50) est un compteur numérique, et en ce que le dispositif sensible à un nombre comporte une source de courant continu variable comprenant un transistor (110) reliant pendant le fonctionnement le dispositif inductif (102) à une source de potentiel continu et un convertisseur numérique-analogique (105) reliant la sortie du compteur à l'électrode de commande du transistor.

13. Installation selon la revendication 12, caractérisée en ce qu'elle comprend en outre un dispositif (12, 112) destiné à connecter l'oscillateur (10) au circuit résonnant par l'intermédiaire du transistor (110).

14. Installation selon la revendication 4, caractérisée en ce que le dispositif sensible à un nombre comporte un dispositif (106) destiné à faire varier le dispositif de référence (56) connecté à la seconde entrée du dispositif de comparaison (54) en fonction dudit nombre.

15. Installation selon la revendication 14, caractérisée en ce que le dispositif de comparaison (54) comporte un dispositif commandé par une différence de tension entre le premier signal d'entrée provenant du dispositif de détection de déphasage (32) et le second signal d'entrée provenant du dispositif de référence (56), et en ce que le dispositif sensible à un nombre (106) comporte un dispositif destiné à faire varier la tension de référence appliquée à la seconde entrée par le dispositif de référence (56).

16. Installation selon la revendication 15, caractérisée en ce que le compteur (50) est un compteur numérique, et en ce que le dispositif (106) sensible à un nombre comporte un convertisseur numérique-analogique destiné à appliquer une tension analogique à la seconde entrée en fonction dudit nombre.

17. Installation selon l'une quelconque des revendications 5 à 16, caractérisée en ce qu'elle comporte en outre un dispositif comprenant une batterie d'accumulateurs (64) couplée au compteur (50) et destinée à conserver le nombre d'étalonnage dans le compteur en cas de panne d'énergie.

18. Installation selon l'une quelconque des revendications 2 à 17, caractérisée en ce que le dispositif (40) destiné à déclencher une opération d'étalonnage comporte un bouton-poussoir manuel commandé par un opérateur.

19. Installation selon la revendication 18, comprenant en outre un dispositif indicateur (60) et un dispositif (58) raccordant le dispositif indicateur à la sortie du dispositif de comparaison (54) afin que la durée de l'opération d'étalonnage soit indiquée.

20. Installation selon la revendication 19, caractérisée en ce que le dispositif (58) reliant le dispositif indicateur comporte un commutateur à semi-conducteur ayant un trajet de contact et une électrode de commande, l'électrode de commande étant connectée à la sortie du dispositif de comparaison, et en ce que le dispositif indicateur (60) comporte une diode photoémissive connectée en série avec le trajet de contact du commutateur à semi-conducteur et le bouton-poussoir (40) aux bornes d'une source d'énergie en courant continu.

21. Installation selon l'une quelconque des revendications précédentes, caractérisée en ce que le dispositif (36, 38) commandé par le dispositif détecteur de déphasage (32) et le dispositif d'étalonnage (34) comporte un dispositif de comparaison (70) ayant une première entrée reliée au dispositif de détection de déphasage (32), une seconde entrée reliée au dispositif d'identification (34), et une sortie qui varie entre un premier et un second état numérique en fonction d'une différence de seuil entre la première et la seconde entrée.

22. Installation selon la revendication 21, caractérisée en outre par un dispositif (62, 80 à 86) destiné à faire varier sélectivement la différence de seuil.

23. Installation selon la revendication 22, caractérisée en ce que le dernier dispositif indiqué comporte au moins une résistance (80, 82) et un dispositif (84, 86) destiné à connecter sélectivement ladite résistance au moins à la seconde entrée.

24. Installation selon la revendication 21, caractérisée en ce qu'elle comprend en outre un dispositif (75) connecté entre le dispositif de détection de déphasage (32) et le dispositif de comparaison (70) et destiné à retarder le fonctionnement du dispositif de comparaison (70) en fonction du signal de sortie du dispositif (32) de détection de déphasage pendant un retard choisi.

25. Installation selon la revendication 24, caractérisée en ce qu'il comprend en outre un dispositif (72, 74, 76, 78) destiné à faire varier sélectivement ce retard.

26. Installation selon la revendication 25, dans laquelle le dernier dispositif indiqué comprend au moins un condensateur (72, 74) et un dispositif (76, 78) destiné à connecter sélectivement ledit condensateur au moins au dispositif de comparaison (70).

27. Installation selon l'une quelconque des revendication 21 à 26, caractérisée en ce qu'elle comprend en outre un dispositif de sécurité (90 à 94) comprenant un dispositif OU exclusif (90) ayunt une première entrée connectée à la sortie du dispositif de comparaison (70) et une seconde entrée, et un dispositif (92, 94) destiné à connecter sélectivement la seconde entrée à un signal numérique de niveau élevé ou de faible niveau.

28. Installation selon la revendication 27, caractérisée en ce qu'elle comprend en outre un relais (100, 102) connecté à la sortie du dispositif OU exclusif (90) et destiné à indiquer le niveau du matériau.

FIG. 1

0 101 580

FIG. 2

FIG. 3

0 101 580

FIG. 4

FROM 12

PROBE 18
20
22

104  102

FROM OSC. 10

C COUNTER R EN
50

D/A CONV.
106

FROM PHASE DET. 32

54

56

62

TO THRESHOLD DETECTOR 36

FIG. 5

+V

114

112

FROM 12

110

108 +V

116

102

104

PROBE 18
20
22

107

C COUNTER R EN
50

D/A CONV.
106

3

FIG. 6